# EUROPÄISCHE PATENTSCHRIFT

(11) **EP 4 490 085 B1**
(45) Veröffentlichungstag und Bekanntmachung des Hinweises auf die Patenterteilung: **25.03.2026**
(21) Anmeldenummer: 23710723.0
(22) Anmeldetag: 09.03.2023
(51) Int. Cl.: B65G 54/02, G05B 17/02, G05B 19/418

(54) **STEUERUNGSKONZEPT FÜR LINEARELEKTROANTRIEB-FÖRDERER**
CONTROL CONCEPT FOR LINEAR ELECTRIC DRIVE CONVEYOR
CONCEPT DE COMMANDE POUR TRANSPORTEUR À ENTRAÎNEMENT ÉLECTRIQUE LINÉAIRE

(30) Priorität: 11.03.2022 DE 102022105731
(43) Veröffentlichungstag der Anmeldung: 15.01.2025
(73) Patentinhaber: KRONES AG, 93073 Neutraubling (DE)
(72) Erfinder: KIENDL, Thomas, 93073 Neutraubling (DE); KAMMERL, Martin, 93073 Neutraubling (DE)
(74) Vertreter: v. Bezold & Partner Patentanwälte - PartG mbB
(86) Internationale Anmeldenummer: PCT/EP2023/056019
(87) Internationale Veröffentlichungsnummer: WO 2023/170210

(56) Entgegenhaltungen:
- EP-A1- 3 045 399
- WO-A1-2021/104829
- AT-A4- 524 046
- US-A1- 2021 135 558

## Beschreibung

### Technisches Gebiet

Die Erfindung betrifft ein Verfahren zum Betreiben eines Linearelektroantrieb-Förderers. Die Erfindung betrifft ferner einen Linearelektroantrieb-Förderer. Die Erfindung betrifft ferner eine Industrieanlage mit einem Linearelektroantrieb-Förderer.

### Technischer Hintergrund

Ein aktueller Entwicklungstrend beim Transport von Behältern, wie bspw. Flaschen oder Dosen, in Anlagen und Maschinen für die Herstellung, Abfüllung und Verpackung von Getränken und flüssigen Nahrungsmitteln ist die Linearmotortechnik, z. B. in Form von Langstator-Linearantriebssystemen oder Kurzstator-Linearantriebssystemen. Die Bewegungsvorrichtungen, auch "shuttle" oder "mover" genannt, können jeweils einen oder mehrere Behälter bewegen. Ein großer Vorteil der Linearmotortechnik liegt darin, dass die Bewegungsvorrichtungen individuell bzw. separat und unabhängig voneinander angesteuert und bewegt werden können.

Die EP 3 045 399 A1 offenbart ein Verfahren gemäß dem Oberbegriff des Anspruchs 1 und eine Gruppe von Movern (Bewegungsvorrichtungen), bestehend aus zwei Movern, die gemeinsam einen Behälter transportieren. Der Behälter wird zwischen den Schultern von zwei Taschen aufgenommen, die jeweils an den beiden Movern befestigt sind. Der freie Abstand zwischen den beiden Movern bestimmt einen Abstand zwischen den beiden Schultern, der gleich der Länge des Behälters ist.

Nachteilig am herkömmlichen Stand der Technik kann sein, dass eine Steuerung der Bewegungsvorrichtungen in Systemen, in denen jeweils mehrere Bewegungsvorrichtungen gemeinsam ein Transportgut transportieren, herausfordernd, steuerungstechnisch komplex und schlecht wartbar ist. Ein besonders großer Aufwand kann beispielsweise insbesondere dann entstehen, wenn eine Umstellung bei den zu transportierenden Transportgütern steuerungstechnisch implementiert werden soll.

Der Erfindung liegt die Aufgabe zu Grunde, eine einfache und/oder verbesserte Steuerung für einen Linearelektroantrieb-Förderer zum Transportieren von Transportgütern zu schaffen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft ein Verfahren zum Betreiben eines Linearelektroantrieb-Förderers (z. B. einer Industrieanlage oder einer Behälterbehandlungsanlage) aufweisend mehrere elektromagnetisch und unabhängig voneinander bewegbare Bewegungsvorrichtungen, die in mehreren Gruppen (z. B. erste Gruppe und zweite Gruppe) zusammengefasst sind (bzw. die mehrere Gruppen bilden). Die mehreren Bewegungsvorrichtungen je Gruppe sind zum gemeinsamen Transportieren eines, vorzugsweise zwischen sich geklemmten oder gemeinsam gehaltenen, Transportguts (bspw. aufweisend ein oder mehrere Gegenstände oder Behälter) bewegbar. Das Verfahren weist ein Erstellen jeweils eines virtuellen Bewegungspfads je Modellobjekt (z. B. erstes Modellobjekt und zweites Modellobjekt) in einem virtuellen Modell, das den Linearelektroantrieb-Förderer repräsentiert, auf. In dem virtuellen Modell ist jede Gruppe durch jeweils ein Modellobjekt repräsentiert. Die erstellten virtuellen Bewegungspfade geben jeweils einen zeitabhängigen Positionsverlauf des jeweiligen Modellobjekts entlang eines statischen Teils des virtuellen Modells an. Das Verfahren weist ferner ein Ansteuern des Linearelektroantrieb-Förderers zum Bewegen einer ersten Bewegungsvorrichtung und einer zweiten Bewegungsvorrichtung je Gruppe entlang eines statischen Teils des Linearelektroantrieb-Förderers in Abhängigkeit von, vorzugsweise gekoppelt oder mitbewegend mit, dem virtuellen Bewegungspfad desjenigen Modellobjekts, das die jeweilige Gruppe repräsentiert, auf.

Vorteilhaft kann das Verfahren eine Steuerung des Linearelektroantrieb-Förderers vereinfachen. Insbesondere können Einstellungen sehr schnell und einfach vorgenommen werden, da alle Bewegungsvorrichtungen einer Gruppe von einem einzigen (virtuellen) Bewegungspfad abhängen. Durch Änderung dieses virtuellen Bewegungspfads können folglich direkt Änderungen in den realen Bewegungspfaden aller Bewegungsvorrichtungen der jeweiligen Gruppe bewirkt werden. Es ist somit nicht mehr notwendig, für jede einzelne Bewegungsvorrichtung der Gruppe separat und angepasst aneinander einen Bewegungspfad zu erstellen. Dadurch kann der Förderer auch wartungsfreundlicher werden. Zudem können Anpassungen und Umstellungen, wenn bspw. andere Transportgüter zu transportieren sind, auf einfache Weise implementiert werden. Hierzu kann bspw. der virtuelle Bewegungspfad je Modellobjekt unverändert bleiben. Lediglich die Abhängigkeit der Bewegung der Bewegungsvorrichtungen je Gruppe von diesem virtuellen Bewegungspfad muss angepasst werden, z. B. an die veränderte Größe des Transportobjekts.

Vorzugsweise können beim Steuern des Linearelektroantrieb-Förderers Elektromagnete des Linearelektroantrieb-Förderers angesteuert werden.

Beispielsweise können die Bewegungen der ersten und zweiten Bewegungsvorrichtung je Gruppe direkt abhängig von dem virtuellen Bewegungspfad desjenigen Modellobjekts, das die jeweilige Gruppe repräsentiert, sein. Es ist jedoch auch möglich, dass bspw. als Zwischenschritt für die erste Bewegungsvorrichtung und die zweite Bewegungsvorrichtung je Gruppe jeweils ein eigener Bewegungspfad von dem virtuellen Bewegungspfad desjenigen Modellobjekts, das die jeweilige Gruppe repräsentiert, abgeleitet wird und die erste Bewegungsvorrichtung und die zweite Bewegungsvorrichtung je Gruppe entsprechend des abgeleiteten eigenen Bewegungspfads bewegt werden.

In einem Ausführungsbeispiel wird der Linearelektroantrieb-Förderer derart gesteuert, dass sich die erste Bewegungsvorrichtung je Gruppe zumindest temporär in einem ersten Abstand zu dem virtuellen Bewegungspfad desjenigen Modellobjekts, das die jeweilige Gruppe repräsentiert, synchron bewegt, vorzugsweise vorauseilt. Alternativ oder zusätzlich wird der Linearelektroantrieb-Förderer derart gesteuert, dass sich die zweite Bewegungsvorrichtung je Gruppe zumindest temporär in einem zweiten Abstand zu dem virtuellen Bewegungspfad desjenigen Modellobjekts, das die jeweilige Gruppe repräsentiert, synchron bewegt, vorzugsweise folgt. Vorteilhaft kann damit erreicht werden, dass eine Anpassung an andere Transportgüter bei einer Umstellung sehr einfach implementiert werden kann, da lediglich die Abstände an die Abmaße des nach der Umstellung zu transportierenden Transportguts angepasst werden müssen.

In einem weiteren Ausführungsbeispiel weist das Verfahren ferner ein Vorgeben des ersten Abstands und/oder des zweiten Abstands, vorzugsweise mittels einer Benutzerschnittstelle, auf. Vorteilhaft kann damit die Anpassung benutzerseitig sehr einfach vorgenommen werden.

In einem weiteren Ausführungsbeispiel erfolgt das Vorgeben des ersten Abstands und/oder des zweiten Abstands in Abhängigkeit von einer Größe des Transportguts. Vorzugsweise kann je größer das Transportgut ist, desto größer kann der erste Abstand und/oder der zweite Abstand vorgegeben werden. Alternativ oder zusätzlich kann beispielsweise eine Summe aus dem ersten Abstand und dem zweiten Abstand im Wesentlichen einer Breite des Transportguts oder im Wesentlichen einem Durchmesser des Transportguts entsprechen.

In einem weiteren Ausführungsbeispiel weist das Verfahren ferner ein Auswählen des Transportguts aus einer Auswahl von unterschiedlich großen Transportgütern auf. Vorzugsweise kann das Vorgeben des ersten Abstands und/oder des zweiten Abstands abhängig von einer Größe des ausgewählten Transportguts erfolgen.

In einer Ausführungsform weist das Verfahren ferner ein Verändern des ersten Abstands und/oder des zweiten Abstands bei einer Transportgutformatumstellung, vorzugsweise bei einer Behälterformatumstellung, auf.

In einer weiteren Ausführungsform weist das Verfahren ferner ein temporäres Übersteuern des ersten Abstands und/oder des zweiten Abstands zum Bewirken einer Relativbewegung zwischen der ersten Bewegungsvorrichtung und der zweiten Bewegungsvorrichtung je Gruppe auf, vorzugsweise zum Übernehmen des Transportguts, Halten des Transportguts, Einklemmen des Transportguts, Übergeben des Transportguts und/oder Freigeben des Transportguts. Vorteilhaft können durch das temporäre Übersteuern auf sehr einfache Weise zusätzliche Funktionen des Förderers implementiert werden.

In einer weiteren Ausführungsform erfolgt das temporäre Übersteuern des ersten Abstands und/oder des zweiten Abstands abhängig von einem veränderbaren Parameterwert, vorzugsweise Größenparameterwert, desjenigen Modellobjekts, das die jeweilige Gruppe repräsentiert. Vorzugsweise kann der veränderbare Parameterwert vor einem Einklemmen des Transportguts größer sein als beim Einklemmen, der veränderbare Parameterwert sich zum Einklemmen des Transportguts verringern, der veränderbare Parameterwert sich zum Freigeben des Transportguts vergrößern und/oder der veränderbare Parameterwert beim Freigeben des Transportguts größer sein als beim Einklemmen. Vorteilhaft kann auf diese Weise zusätzlich sichergestellt werden, dass bereits der Parameterwert des Modelobjekts eine Kollision der Bewegungsvorrichtungen je Gruppe verhindern kann.

Vorzugsweise kann sich der Parameterwert entlang des virtuellen Bewegungspfads verändern.

Bevorzugt kann eine Veränderung des Parameterwerts entlang des virtuellen Bewegungspfads vorgebbar sein, vorzugsweise mittels einer Benutzerschnittstelle.

In einer Ausführungsvariante weist das Verfahren ferner ein Festlegen von einem von dem ersten Abstand und dem zweiten Abstand auf einen konstanten Wert auf. Vorzugsweise kann das Verfahren ferner ein temporäres Übersteuern des anderen von dem ersten Abstand und dem zweiten Abstand mit einer kraftgeregelten Bewegung der jeweiligen Bewegungsvorrichtung (z. B. derjenigen Bewegungsvorrichtung, deren Abstand, d.h. erster oder zweiten Abstand, übersteuert wird) zum Klemmen des Transportguts zwischen der ersten Bewegungsvorrichtung und der zweiten Bewegungsvorrichtung aufweisen. Vorteilhaft kann auf diese Weise sehr einfach eine Haltefunktion für das Transportgut implementiert werden.

In einer weiteren Ausführungsvariante wird der Linearelektroantrieb-Förderer derart gesteuert, dass sich die erste Bewegungsvorrichtung und die zweite Bewegungsvorrichtung je Gruppe entlang des statischen Teils des Linearelektroantrieb-Förderers zumindest temporär unter Vollführung einer Relativbewegung zueinander zum Einklemmen, Halten und/oder Freigeben des Transportguts mit dem virtuellen Bewegungspfad desjenigen Modellobjekts, das die jeweilige Gruppe repräsentiert, mitbewegen.

In einer weiteren Ausführungsvariante weist das Verfahren ferner ein Steuern des Linearelektroantrieb-Förderers zum Bewegen einer dritten Bewegungsvorrichtung je Gruppe entlang des statischen Teils des Linearelektroantrieb-Förderers in Abhängigkeit von, vorzugsweise gekoppelt oder mitbewegend mit, dem virtuellen Bewegungspfad desjenigen Modellobjekts, das die jeweilige Gruppe repräsentiert, auf. Vorteilhaft kann das Steuerungskonzept aufgrund seiner Funktionskapselung somit für unterschiedliche Gruppengrößen verwendbar und sehr einfach an unterschiedliche Gruppengrößen anpassbar sein. Vorteilhaft kann damit insbesondere ein Testaufwand für neue Anwendungen verringert werden.

Vorzugsweise können die bezüglich der ersten Bewegungsvorrichtung und der zweiten Bewegungsvorrichtung genannten Merkmale ebenso auf die dritte Bewegungsvorrichtung je Gruppe angewendet werden, z. B. dritter Abstand usw.

In einem Ausführungsbeispiel weist der virtuelle Bewegungspfad je Modellobjekt einen Pfadabschnitt auf, der sich von einem Transportgutübernahmepunkt zum Übernehmen des Transportguts zu einem Transportgutübergabepunkt zum Übergeben des Transportguts erstreckt.

In einem weiteren Ausführungsbeispiel ist der Linearelektroantrieb-Förderer ein Langstator-Linearantrieb-Förderer, ein Kurzstator-Linearantrieb-Förderer oder ein Planar-Linearantrieb-Förderer.

Ein weiterer Aspekt der vorliegenden Offenbarung betrifft einen Linearelektroantrieb-Förderer für eine Industrieanlage, vorzugsweise Behälterbehandlungsanlage. Der Linearelektroantrieb-Förderer weist mehrere elektromagnetisch und unabhängig voneinander bewegbare Bewegungsvorrichtungen auf, die in mehreren Gruppen zusammengefasst bzw. zusammenfassbar sind. Die mehreren Bewegungsvorrichtungen je Gruppe sind zum gemeinsamen Transportieren eines, vorzugsweise zwischen sich geklemmten oder gemeinsam gehaltenen, Transportguts (bspw. aufweisend ein oder mehrere Gegenstände oder Behälter) bewegbar. Der Linearelektroantrieb-Förderer weist eine Steuereinheit auf, die dazu konfiguriert ist, ein Verfahren wie hierin offenbart auszuführen. Vorteilhaft lassen sich mit dem Linearelektroantrieb-Förderer die gleichen Vorteile erzielen, die bereits unter Bezugnahme auf das Verfahren beschrieben wurden.

Ein weiterer Aspekt der vorliegenden Offenbarung betrifft eine Industrieanlage, vorzugsweise Behälterbehandlungsanlage. Die Industrieanlage weist einen Linearelektroantrieb-Förderer wie hierin offenbart auf.

Vorzugsweise ist die Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, ausgebildet.

Bevorzugt können die Transportgüter als Behälter ausgeführt sein. Beispielsweise können die Behälter als Flaschen, Dosen, Kanister, Kartons, Flakons usw. ausgeführt sein.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine schematische Darstellung eines Linearelektroantrieb-Förderers zum Transportieren von Transportgütern;
- Figur 2: eine schematische Darstellung mehrerer Bewegungspfade der Bewegungsvorrichtungen des Förderers von Figur 1;
- Figur 3: eine schematische Darstellung eines Linearelektroantrieb-Förderers zum Transportieren von Transportgütern;
- Figur 4: eine schematische Darstellung mehrerer Bewegungspfade der Bewegungsvorrichtungen des Förderers von Figur 3;
- Figur 5: eine schematische Darstellung eines Linearelektroantrieb-Förderers gemäß einem Ausführungsbeispiel der vorliegenden Offenbarung;
- Figur 6: ein virtuelles Modell des Linearelektroantrieb-Förderers von Figur 5 gemäß einem Ausführungsbeispiel der vorliegenden Offenbarung;
- Figur 7: eine schematische Darstellung mehrerer virtueller Bewegungspfade von mehreren Modellobjekten des virtuellen Modells von Figur 6 gemäß einem Ausführungsbeispiel der vorliegenden Offenbarung;
- Figur 8: eine schematische Darstellung einer Bewegung mehrerer Bewegungsvorrichtungen relativ zu einem der virtuellen Bewegungspfads von Figur 7 gemäß einem Ausführungsbeispiel der vorliegenden Offenbarung;
- Figur 9: eine schematische Darstellung einer Steuerung mehrerer Bewegungsvorrichtungen zum Transportieren eines Transportguts gemäß einem Ausführungsbeispiel der vorliegenden Offenbarung; und
- Figur 10: eine schematische Darstellung von Ausführungsvarianten eines Linearelektroantrieb-Förderers zum Anwenden der Techniken der vorliegenden Offenbarung:

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung

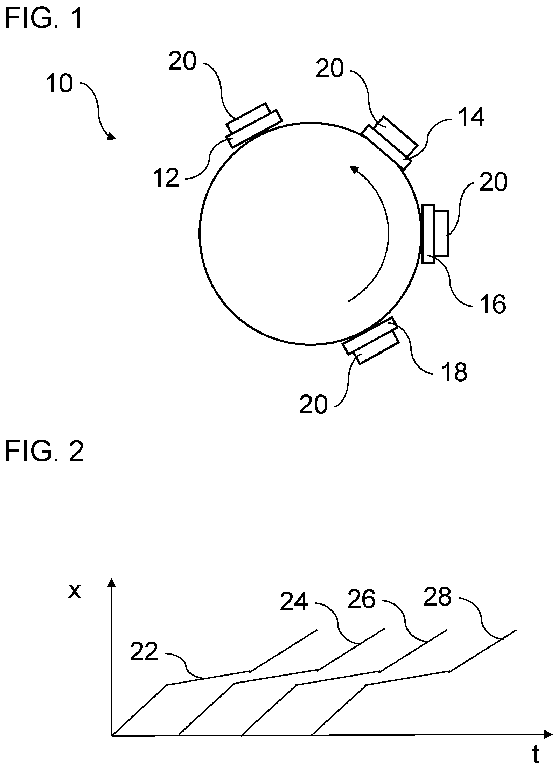

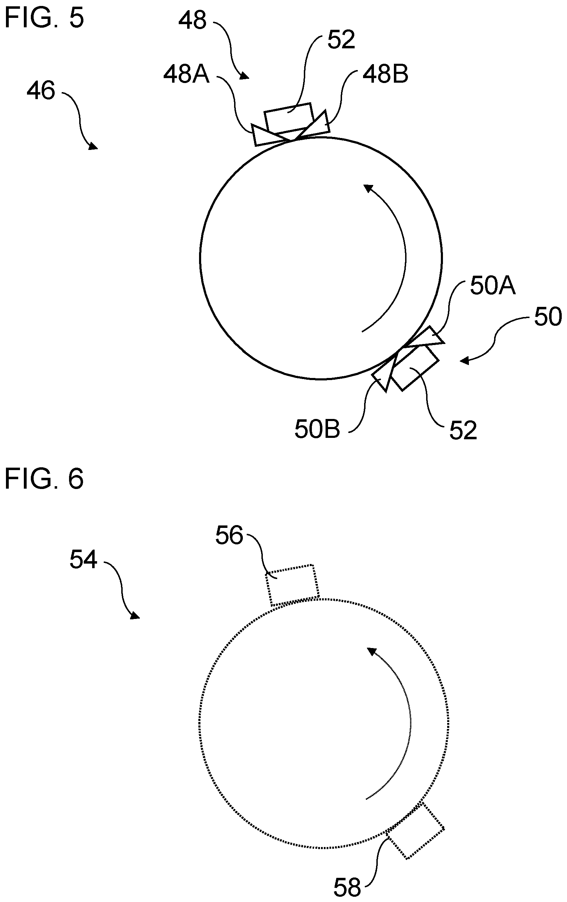

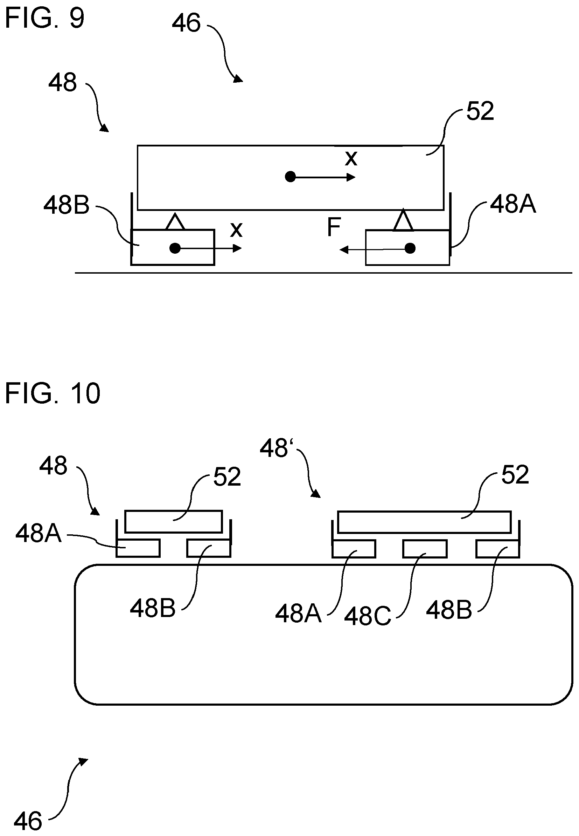

Nachfolgend sind zunächst die Figuren 1 bis 4 näher erläutert. Darauf aufbauend sind dann die Figuren 5 bis 8 näher beschrieben, die ein Ausführungsbeispiel der vorliegenden Offenbarung veranschaulichen. Abschließend sind verschiedene Modifikationsbeispiele unter Bezugnahme auf die Figuren 9 und 10 beschrieben.

Die Figur 1 zeigt einen Linearelektroantrieb-Förderer 10 mit mehreren Bewegungsvorrichtungen 12, 14, 16, 18. Um die Darstellung zu vereinfachen, sind keine Übernahmebereiche zum Übernehmen der Transportgüter bzw. Nutzlasteinheiten 20 auf die Bewegungsvorrichtungen 12-18, keine Übergabebereiche zum Übergeben der Transportgüter 20 von den Bewegungsvorrichtungen 12-18, keine optionalen Behandlungsstationen entlang des Förderers 10 und auch nur beispielhaft vier Bewegungsvorrichtungen 12-18 dargestellt.

Die Bewegungsvorrichtungen 12-18 werden individuell angesteuert. Mit den Bewegungsvorrichtungen 12-18 können bestimmte Aufgaben realisiert werden. Beispielsweise erfolgt die Abarbeitung der Aufgaben sequenziell mit jeweils einzelnen Bewegungsvorrichtungen 12-18. Jede Bewegungsvorrichtung 12-18 greift jeweils ein Transportgut 20, zum Beispiel einen Behälter oder mehrere Behälter, und verfährt dieses Transportgut 20 wie gewünscht. Eine Kommunikation mit einer optionalen Behandlungsstation für die Transportgüter 20 wird für jede Bewegungsvorrichtung 12-18 einzeln benötigt. Die Ansteuerung der Bewegungsvorrichtungen 12-18 ist dahingehend einfach, dass jede Bewegungsvorrichtung 12-18 dieselbe Aufgabe hat. Letztlich muss damit lediglich ein einziger Ablauf bzw. eine einzige Ablaufstruktur projektiert werden.

Die Figur 2 zeigt hierfür beispielhaft die jeweiligen Bewegungspfade 22-28. Die Bewegungspfade 22-28 geben eine Position x der Bewegungsvorrichtungen 12-18 entlang eines statischen Teils des Förderers 10 in Abhängigkeit von einer Zeit t an. Die Bewegungsvorrichtung 12 wird entsprechend dem Bewegungspfad 22 gesteuert. Die Bewegungsvorrichtung 14 wird entsprechend dem Bewegungspfad 24 gesteuert. Die Bewegungsvorrichtung 16 wird entsprechend dem Bewegungspfad 26 gesteuert. Die Bewegungsvorrichtung 18 wird entsprechend dem Bewegungspfad 28 gesteuert. Die Bewegungspfade 22-28 sind an sich gleich, jedoch von Bewegungsvorrichtung zu Bewegungsvorrichtung zeitlich versetzt.

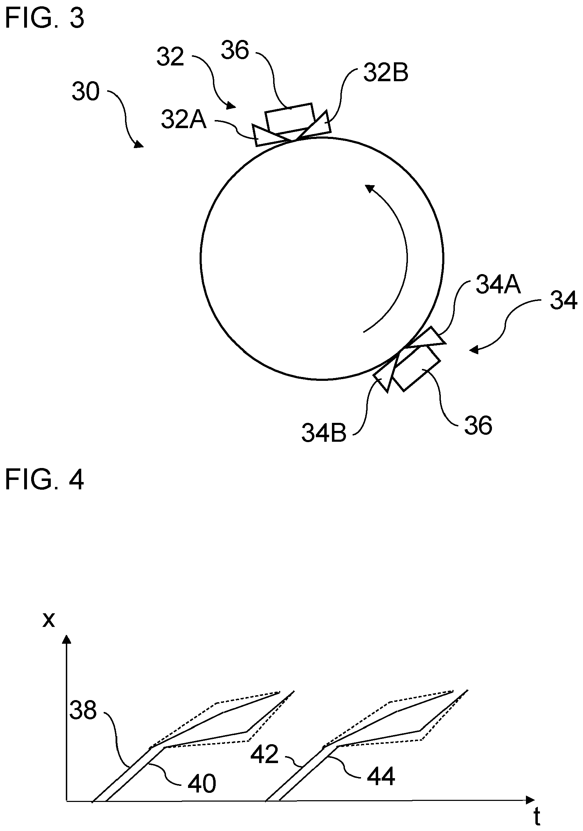

Die Figur 3 zeigt einen Linearelektroantrieb-Förderer 30 mit mehreren Bewegungsvorrichtungen 32A, 32B, 34A, 34B. Um die Darstellung zu vereinfachen, sind u.a. keine Übernahmebereiche zum Übernehmen der Transportgüter 36 auf die Bewegungsvorrichtungen 32A, 32B, 34A, 34B, keine Übergabebereiche zum Übergeben der Transportgüter 36 von den Bewegungsvorrichtungen 32A, 32B, 34A, 34B, keine optionalen Behandlungsstationen entlang des Förderers 30 und auch nur beispielhaft vier Bewegungsvorrichtungen 32A, 32B, 34A, 34B dargestellt.

Die Bewegungsvorrichtungen 32A und 32B sind zu einer ersten Gruppe 32 zusammengefasst bzw. bilden die erste Gruppe 32. Die Bewegungsvorrichtungen 34A und 34B sind zu einer zweiten Gruppe 34 zusammengefasst bzw. bilden die zweite Gruppe 34. Die Bewegungsvorrichtungen 32A, 32B der ersten Gruppe 32 haben die Aufgabe, gemeinsam ein Transportgut 36 zu transportieren. Die Bewegungsvorrichtungen 34A, 34B der zweiten Gruppe 34 haben die Aufgabe, gemeinsam ein weiteres Transportgut 36 zu transportieren.

Zum Steuern der Bewegungsvorrichtungen 32A, 32B, 34A, 34B besteht nun die Möglichkeit, unterschiedliche Abläufe bzw. Bewegungspfade für die unterschiedlichen Bewegungsvorrichtungen 32A, 32B, 34A, 34B zu erstellen. Diese müssten dann für unterschiedlich große Transportgüter 36 jeweils vollständig überarbeitet werden.

Die Figur 4 zeigt hierfür beispielhaft die jeweiligen Bewegungspfade 38-44. Die Bewegungspfade 38-44 geben eine Position x der Bewegungsvorrichtungen 32A, 32B, 34A, 34B entlang eines statischen Teils des Förderers 30 in Abhängigkeit von einer Zeit t an. Die erste Bewegungsvorrichtung 32A der ersten Gruppe 32 wird entsprechend dem Bewegungspfad 38 gesteuert. Die zweite Bewegungsvorrichtung 32B der ersten Gruppe 32 wird entsprechend dem zweiten Bewegungspfad 40 gesteuert. Die erste Bewegungsvorrichtung 34A der zweiten Gruppe 34 wird entsprechend dem Bewegungspfad 42 gesteuert. Die zweite Bewegungsvorrichtung 34B der zweiten Gruppe 34 wird entsprechend dem Bewegungspfad 44 gesteuert.

Die Bewegungspfade 38-44 unterscheiden sich voneinander. Die Bewegungspfade 38 und 40 sowie 42 und 44 müssen zudem aufwendig einander angepasst sein, um ein Einklemmen des jeweiligen Transportguts 36 zwischen sich bei der Transportgutübernahme, einem gemeinsamen Transportieren des jeweiligen Transportgutes 36 und ein Freigeben des jeweils zwischen sich geklemmten Transportguts 36 am Ende des Transports zu ermöglichen. Würde der Linearelektroantrieb-Förderer 30 nun noch mit unterschiedlich großen Transportgütern 36 betreibbar sein, so kann der Steuerungsaufwand um ein Vielfaches steigen, da die Bewegungspfade 38-44 für jedes Transportgutformat separat zu erstellen sind (angedeutet in Figur 4 durch die gestrichelten Linien).

Nachfolgend ist unter Bezugnahme auf die Figuren 5 bis 8 ein Steuerungskonzept gemäß einem Ausführungsbeispiel der vorliegenden Offenbarung beschrieben, das die oben genannten Nachteile überwinden kann.

Die Figur 5 zeigt einen Linearelektroantrieb-Förderer 46 mit mehreren Bewegungsvorrichtungen 48A, 48B, 50A, 50B. Um die Darstellung zu vereinfachen, sind u.a. keine Übernahmebereiche zum Übernehmen der Transportgüter 52 auf die Bewegungsvorrichtungen 48A, 48B, 50A, 50B, keine Übergabebereiche zum Übergeben der Transportgüter 52 von den Bewegungsvorrichtungen 48A, 48B, 50A, 50B, keine optionalen Behandlungsstationen entlang des Förderers 46 und auch nur beispielhaft vier Bewegungsvorrichtungen 48A, 48B, 50A, 50B dargestellt.

Beispielsweise kann der Förderer 46 in einer Industrieanlage zum Transportieren der Transportgüter 52 umfasst sein. Die Transportgüter 52 können jeweils ein oder mehrere Gegenstände, vorzugsweise Behälter, umfassen. Vorzugsweise kann der Förderer 46 zum Transportieren von als Behälter ausgeführten Transportgütern 52 ausgebildet sein. Besonders bevorzugt kann der Förderer 46 in einer Behälterbehandlungsanlage zum Behandeln von Behältern umfasst sein, zum Beispiel um die Behälter zwischen Behälterbehandlungsvorrichtungen der Behälterbehandlungsanlage zu transportieren.

Die Bewegungsvorrichtungen 48A, 48B, 50A, 50B sind elektromagnetisch bewegbar. Die Bewegungsvorrichtungen 48A, 48B, 50A, 50B sind unabhängig voneinander bewegbar. Die Bewegungsvorrichtungen 48A, 48B, 50A, 50B können individuell von einer Steuereinheit (nicht gesondert in Figur 5 dargestellt) des Förderers 46 ansteuerbar sein, z. B. direkt oder indirekt.

Beispielsweise kann der Förderer 46 ein Langstator-Linearantrieb-Förderer, ein Kurzstator-Linearantrieb-Förderer oder ein Planar-Linearantrieb-Förderer sein.

Der Langstator- oder Kurzstator-Linearantrieb-Förderer kann die mehreren Bewegungsvorrichtungen 48A, 48B, 50A, 50B aufweisen, die entlang einer bevorzugt umlaufenden Führungsbahn geführt sind, z. B. mittels Rollen oder Gleitschuhen. Die Bewegungsvorrichtungen 48A, 48B, 50A, 50B können mittels magnetischer Wechselwirkung zwischen Permanentmagneten und Elektromagneten angetrieben werden. Beim Langstator-Linearantrieb-Förderer kann ein ortsfester Langstator mit Elektromagneten zum Bewirken einer Bewegung der mit Permanentmagneten ausgestatteten Bewegungsvorrichtungen 48A, 48B, 50A, 50B umfasst sein. Beim Kurzstator-Linearantrieb-Förderer können hingegen die Bewegungsvorrichtungen 48A, 48B, 50A, 50B jeweils einen durch Elektromagnete gebildeten Kurzstator aufweisen, der zum Bewegen der Bewegungsvorrichtungen 48A, 48B, 50A, 50B in magnetische Wechselwirkung mit ortsfesten Permanentmagneten treten kann.

Der Planar-Linearantrieb-Förderer bzw. der Planarmotor-Linearantrieb-Förderer kann die mehreren Bewegungsvorrichtungen 48A, 48B, 50A, 50B aufweisen, die mit mindestens zwei Freiheitgraden (x-Richtung und y-Richtung) über eine bevorzugt planare Antriebsfläche mittels magnetischer Wechselwirkung mit der Antriebsfläche unabhängig voneinander bewegt werden können. Es ist auch möglich, dass zusätzlich eine Hubbewegung (z-Richtung) und/oder eine Neigebewegung der Bewegungsvorrichtungen 48A, 48B, 50A, 50B relativ zu der Antriebsfläche mittels der magnetischen Wechselwirkung steuerbar ist. Bevorzugt kann die Antriebsfläche horizontal oder vertikal ausgerichtet sein.

Die Bewegungsvorrichtungen 48A und 48B sind zu einer ersten Gruppe 48 zusammengefasst bzw. bilden die erste Gruppe 48. Die Bewegungsvorrichtungen 48A, 48B der ersten Gruppe 48 haben die Aufgabe, gemeinsam ein Transportgut 52 zu transportieren. Bevorzugt können die Bewegungsvorrichtungen 48A, 48B das Transportgut 52 zum Transportieren zwischen sich einklemmen. Es ist möglich, dass die erste Gruppe 48 aus der ersten Bewegungsvorrichtung 48A und der zweiten Bewegungsvorrichtung 48B um mindestens eine weitere Bewegungsvorrichtung (nicht in Figur 5 dargestellt) erweitert wird, um das Transportgut 52 gemeinsam zu transportieren.

Die Bewegungsvorrichtungen 50A und 50B sind zu einer zweiten Gruppe 50 zusammengefasst bzw. bilden die zweite Gruppe 50. Die Bewegungsvorrichtungen 50A, 50B der zweiten Gruppe 50 haben die Aufgabe, gemeinsam ein weiteres Transportgut 52 zu transportieren. Bevorzugt können die Bewegungsvorrichtungen 50A, 50 das weitere Transportgut 52 zum Transportieren zwischen sich einklemmen. Es ist möglich, dass die zweite Gruppe 50 aus der ersten Bewegungsvorrichtung 50A und der zweiten Bewegungsvorrichtung 50B um mindestens eine weitere Bewegungsvorrichtung (nicht in Figur 5 dargestellt) erweitert wird, um das weitere Transportgut 52 gemeinsam zu transportieren.

Wie erwähnt, ist es möglich, dass der Förderer 46 weitere Gruppe von Bewegungsvorrichtungen zum Transportieren weiterer Transportgüter aufweist (nicht in Figur 5 dargestellt).

Die Figur 6 zeigt rein schematisch ein virtuelles Modell 54, das genutzt werden kann, um ein Steuern des Förderers 46 zu unterstützen. Das virtuelle Modell 54 kann den Förderer 46 abstrahiert abbilden. Bevorzugt abstrahiert das virtuelle Modell 54 den Förderer 46 derart, dass nicht jede einzelne reale Bewegungsvorrichtung 48A, 48B, 50A, 50B modelliert wird, sondern nur die Gruppen 48, 50 an sich. Entsprechend weist das virtuelle Modell 54 ein Modellobjekt 56, das die erste Gruppe 48 repräsentiert bzw. modellhaft abbildet, und ein Modellobjekt 58, das die zweite Gruppe 50 repräsentiert bzw. modellhaft abbildet, und ggf. weitere Modellobjekte für weitere Gruppen (nicht in Figur 6 dargestellt) auf.

Man kann das virtuelle Modell 54 auch wie folgt interpretieren. Die Modellobjekte 56, 58 können als virtuelle Bewegungsvorrichtungen interpretiert werden, die jeweils einzeln ein Transportgut bewegen können. Es besteht also eine Zuordnung von je einer Bewegungsvorrichtung zu je einem Transportgut. Wie erläutert, ist dies gegensätzlich zu dem tatsächlichen Förderer 46, bei dem je mindestens zwei Bewegungsvorrichtungen 48A, 48B und 50A, 50B gemeinsam je ein Transportgut 52 bewegen. Das virtuelle Modell 54 kann damit den Förderer 46 von einer reellen Zuordnung, bei der jeweils mehrere Bewegungsvorrichtungen 48A, 48B und 50A, 50B je ein Transportgut 52 gemeinsam transportieren, auf eine vereinfachte Zuordnung, bei der je eine Bewegungsvorrichtung je ein Transportgut transportiert, abstrahieren. In anderen Worten gesagt, kann das virtuelle Modell 54 so tun, als wäre der Förderer 46 von Figur 5 wie der Förderer 10 von Figur 1 ausgeführt.

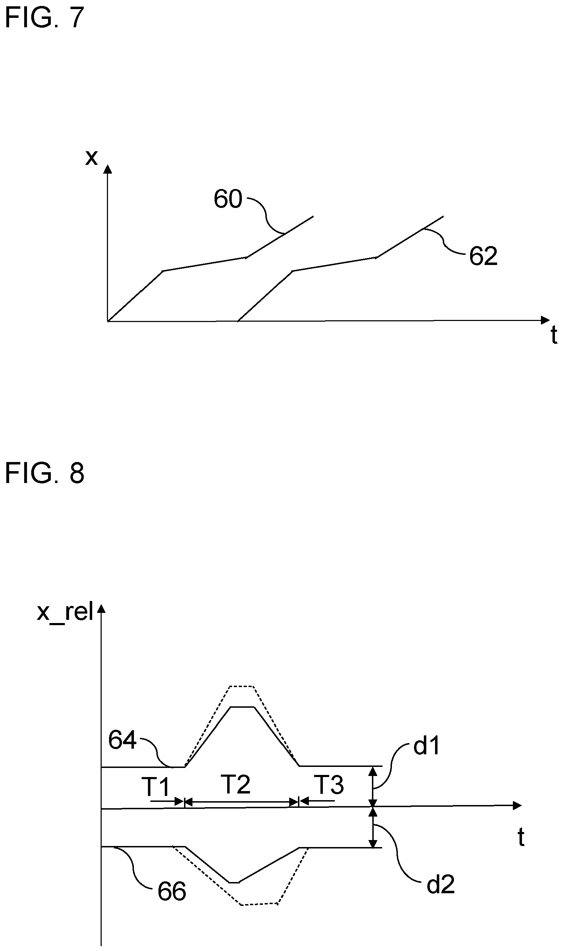

In Figur 7 ist dargestellt, dass für die Modellobjekte 56, 58 jeweils ein virtueller Bewegungspfad 60, 62 erstellt werden kann. Der erste virtuelle Bewegungspfad 60 gibt einen zeitabhängigen Positionsverlauf des ersten Modellobjekts 56 entlang des statischen Teils des virtuellen Modells 54 an. Der zweite virtuelle Bewegungspfad 62 kann einen zeitabhängigen Positionsverlauf des zweiten Modellobjekts 56 entlang des statischen Teils des virtuellen Modells 54 angeben. Der statische Teil des virtuellen Modells 54 kann beispielsweise eine umlaufende Führungsbahn, einen Langstator, eine Reihe von Permanentmagneten (z. B. bei einem Kurzstator-Antrieb) oder eine Antriebsfläche repräsentieren bzw. modellhaft abbilden.

Die virtuellen Bewegungspfade 60, 62 können bevorzugt mindestens einen Pfadabschnitt aufweisen, der sich von einem Transportgutübernahmepunkt zum Übernehmen des Transportguts zu einem Transportgutübergabepunkt zum Übergeben des Transportguts erstreckt. Bevorzugt weisen die virtuellen Bewegungspfade 60, 62 jeweils noch einen weiteren Pfadabschnitt zum Rückführen des Modellobjekts 56, 58 von dem Transportgutübergabepunkt zu dem Transportgutübernahmepunkt.

Das virtuelle Modell 54 kann eine bevorzugt oberste Funktionsebene zur Steuerung des Förderers 46 darstellen. Diese oberste Funktionsebene kann innerhalb der Steuerung die Schnittstelle nach außen bilden, zum Beispiel zum Synchronisieren zu den Transportgütern 52, zum Übergabeförderer (z. B. Übergabestern), zur Behandlungsstation usw.. Auf einer darunterliegenden Funktionsebene kann sich der reale Förderer 46 mit seinen Bewegungsvorrichtungen 48A, 48B, 50A, 50B befinden.

Die (realen) Bewegungsvorrichtungen 48A, 48B, 50A, 50B werden in Abhängigkeit von den erstellten virtuellen Bewegungspfaden 60, 62 gesteuert. Vorzugsweise synchronisieren sich die Bewegungsvorrichtungen 48A, 48B, 50A, 50B auf die virtuellen Bewegungspfade 60, 62 bzw. die Modellobjekte 56, 58 auf und bewegen sich bevorzugt die gesamte Produktion über im Wesentlichen synchron mit diesen mit.

Im Einzelnen werden die erste Bewegungsvorrichtung 48A und die zweite Bewegungsvorrichtung 48B der ersten Gruppe 48 in Abhängigkeit von dem ersten virtuellen Bewegungspfad 60 des ersten Modellobjekts 56 zum Bewegen entlang eines statischen Teils des Förderers 46 gesteuert. Bevorzugt können sich die Bewegungsvorrichtungen 48A, 48B gekoppelt, vorzugsweise mitbewegend, mit dem ersten virtuellen Bewegungspfad 60 bewegen. Beispielsweise kann der statische Teil des Förderers 46 eine umlaufende Führungsbahn, ein Langstator, eine Reihe von Permanentmagneten (z. B. bei einem Kurzstator-Antrieb) oder eine Antriebsfläche aufweisen.

Die erste Bewegungsvorrichtung 50A und die zweite Bewegungsvorrichtung 50B der zweiten Gruppe 50 werden in Abhängigkeit von dem zweiten virtuellen Bewegungspfad 62 des zweiten Modellobjekts 58 zum Bewegen entlang des statischen Teils des Förderers 46 gesteuert. Bevorzugt können sich die Bewegungsvorrichtungen 50A, 50B gekoppelt, vorzugsweise mitbewegend, mit dem zweiten virtuellen Bewegungspfad 62 bewegen

Die Figur 8 zeigt im Einzelnen beispielhaft, wie die Abhängigkeit der Ansteuerung der Bewegungsvorrichtungen 48A, 48B von dem erstellten virtuellen Bewegungspfad 60 implementiert sein kann.

In Figur 8 sind relative Bewegungspfade 64, 66 dargestellt. Der erste Bewegungspfad 64 kann einen Verlauf einer relativen Position x_rel der ersten Bewegungsvorrichtung 48A relativ zum ersten virtuellen Bewegungspfad 60 (bzw. zum ersten Modellobjekt 56) in Abhängigkeit von der Zeit t angeben. Der zweite Bewegungspfad 66 kann einen Verlauf einer relativen Position x_rel der zweiten Bewegungsvorrichtung 48B relativ zum ersten virtuellen Bewegungspfad 60 (bzw. zum ersten Modellobjekt 56) in Abhängigkeit von der Zeit t angeben.

Bevorzugt können die Bewegungsvorrichtungen 48A, 48B sich zumindest temporär synchron mit dem ersten virtuellen Bewegungspfad 60 mitbewegen. Dies ist in Figur 8 in den Zeitabschnitten T1 und T3 schematisch veranschaulicht.

Wie dem relativen Bewegungspfad 64 zu entnehmen ist, kann die erste Bewegungsvorrichtung 48A zumindest temporär zum synchronen Bewegen in einem ersten Abstand d1 zu dem ersten virtuellen Bewegungspfad 60 gesteuert werden. Bevorzugt eilt die erste Bewegungsvorrichtung 48A dem ersten virtuellen Bewegungspfad 60 im ersten Abstand d1 voraus. Wie dem relativen Bewegungspfad 66 zu entnehmen ist, kann die zweite Bewegungsvorrichtung 48B wiederum zumindest temporär zum synchronen Bewegen in einem zweiten Abstand d2 zu dem ersten virtuellen Bewegungspfad 60 angesteuert werden. Vorzugsweise folgt die zweite Bewegungsvorrichtung 48B hierbei dem ersten virtuellen Bewegungspfad 60 im zweiten Abstand d2.

Der erste Abstand d1 und/oder der zweite Abstand d2 können vorgegeben werden. Bevorzugt können der erste Abstand d1 und/oder der zweite Abstand d2 mittels einer Benutzerschnittstelle (nicht gesondert dargestellt) des Förderers 46 eingegeben werden.

Bevorzugt kann der erste Abstand d1 und/oder der zweite Abstand d2 in Abhängigkeit von einer Größe des Transportguts 52 vorgegeben werden. Je größer das Transportgut 52 ist, desto größer kann der erste Abstand d1 und/oder der zweite Abstand d2 vorgegeben werden. Eilt die erste Bewegungsvorrichtung 48A dem ersten virtuellen Bewegungspfad 60 voraus und folgt die zweite Bewegungsvorrichtung 48B dem ersten virtuellen Bewegungspfad, so kann vorzugsweise eine Summe aus dem ersten Abstand d1 und dem zweiten Abstand d2 im Wesentlichen einer Breite oder einem Durchmesser des Transportguts 52 entsprechen.

Diese Steuerung kann somit auf besonders einfache Weise angepasst werden, wenn eine Transportgutformatsumstellung, vorzugsweise Behälterformatumstellung, erfolgt. Beispielsweise kann das Transportgut 52 aus mehreren unterschiedlich großen Transportgütern ausgewählt werden und der erste Abstand d1 und/oder der zweite Abstand d2 abhängig von einer Größe des ausgewählten Transportguts 52 vorgegeben werden. Wird zu einem anderen Zeitpunkt ein größeres oder kleineres Transportgut 52 aus den mehreren unterschiedlich großen Transportgütern ausgewählt, so können die Abstände d1 und/oder d2 einfach an dieses ausgewählte Transportgut 52 angepasst werden. Eine Anpassung des ersten Abstands d1 und/oder des zweiten Abstands d2 hat keine Auswirkung auf den ersten virtuellen Bewegungspfad 60 bzw. auf eine Bewegung des ersten Modellobjekts 56.

Die erste Bewegungsvorrichtung 48A und die zweite Bewegungsvorrichtung 48B der ersten Gruppe 48 (und gegebenenfalls jeder weiteren Gruppe) können sich während der Kopplung, vorzugsweise dem Mitbewegen, mit dem virtuellen Bewegungspfad 60 relativ zueinander bewegen. So können beispielsweise unterschiedliche Funktionen erfüllt werden.

Beispielsweise können die Bewegungsvorrichtungen 48A, 48B so gesteuert werden, dass sie sich relativ aufeinander zu bewegen, zum Beispiel um das Transportgut 52 zwischen sich einzuklemmen oder zu halten. Vorzugsweise kann sich die erste Bewegungsvorrichtung 48A zum Einnehmen des ersten Abstands d1 relativ hin zu der zweiten Bewegungsvorrichtung 48B bewegen, und/oder die zweite Bewegungsvorrichtung 48B kann sich zum Einnehmen des zweiten Abstands d2 relativ hin zu der ersten Bewegungsvorrichtung 48A bewegen. Dies kann beispielsweise durch temporäres Beschleunigen der zweiten Bewegungsvorrichtung 48B und/oder temporäres Verzögern der ersten Bewegungsvorrichtung 48A erfolgen.

In einem anderen Beispiel können die Bewegungsvorrichtungen 48A, 48B so angesteuert werden, dass sie sich relativ voneinander wegbewegen, zum Beispiel um das zwischen sich geklemmte oder gehaltene Transportgut 52 freizugeben. Vorzugsweise kann sich die erste Bewegungsvorrichtung 48A ausgehend vom ersten Abstand d1 relativ weg von der zweiten Bewegungsvorrichtung 48B bewegen, und/oder die zweite Bewegungsvorrichtung 48B kann sich ausgehend von dem zweiten Abstand d2 relativ weg von der ersten Bewegungsvorrichtung 48A bewegen Dies kann beispielsweise durch temporäres Beschleunigen der ersten Bewegungsvorrichtung 48A und/oder temporäres Verzögern der zweiten Bewegungsvorrichtung 48B erfolgen.

Im Einzelnen können spezielle Funktionen, wie das Einklemmen, Halten, Freigeben eines Transportguts 52 als Übersteuerung der Kopplung, bei der die Bewegungsvorrichtungen 48A und 48B mittels der Abstände d1, d2 an den ersten virtuellen Bewegungspfad 60 bzw. das erste Modellobjekt gekoppelt sind, implementiert sein. Dies ist beispielsweise in Figur 8 im Zeitabschnitt T2 veranschaulicht. Wie anhand der relativen Bewegungspfade 64, 66 in Figur 8 nachvollziehbar ist, vergrößern die Bewegungsvorrichtungen 48A und 48A im Zeitabschnitt T2 ausgehend von den Abständen d1, d2 ihren Abstand zum ersten virtuellen Bewegungspfad 60 bzw. zum ersten Modellobjekt 56 zunächst. Später im Zeitabschnitt T2 verringern die Bewegungsvorrichtungen 48A und 48B wieder ihre Abstände zum ersten virtuellen Bewegungspfad 60 bzw. dem ersten Modellobjekt 56 auf die Abstände d1 und d2. Beispielsweise könnte im Zeitabschnitt T2 ein Freigeben eines Transportguts 52 und ein anschließendes Einklemmen oder Halten eines weiteren Transportguts 52 erfolgen. Im Zeitabschnitt T2 können also der erste Abstand d1 und/oder der zweite Abstand d2 mit der entsprechenden Funktion zum relativen Bewegen übersteuert werden. Die gestrichelten Linien im Zeitabschnitt T2 sollen veranschaulichen, dass jegliche Funktionen zum relativen Bewegen der Bewegungsvorrichtungen 48A und 48B zueinander implementiert werden können.

Steuerungstechnisch kann das temporäre Übersteuern des erste Abstands d1 und/oder des zweiten Abstand d2 beispielsweise derart implementiert sein, dass das temporäre Übersteuern abhängig von einem veränderbaren Parameterwert des Modellobjekts 56 ist. Der Parameterwert kann bevorzugt ein Größenparameterwert sein, der eine virtuelle Größe des Modellobjekts 56 angibt. Solange der Parameterwert konstant ist, können beispielsweise die Abstände d1 und d2 gehalten werden. Zum Vergrößern eines Abstands zwischen den Bewegungsvorrichtungen 48A und 48B kann der Parameterwert vergrößert werden, zum Beispiel zum Freigeben eines Transportguts 52. Zum Verkleinern eines Abstands zwischen den Bewegungsvorrichtungen 48A und 48B kann der Parameterwert verkleinert werden, zum Beispiel zum Einklemmen des Transportguts 52.

Die Figur 9 zeigt ein modifiziertes Ausführungsbeispiel.

Hierbei kann beispielsweise die zweite Bewegungsvorrichtung 48B fest gekoppelt zu dem ersten virtuellen Bewegungspfad 60 bzw. dem ersten Modellobjekt 56 gekoppelt bewegt werden. Die erste Bewegungsvorrichtung 48A wiederum kann temporär kraftgeregelt bewegt werden, um das Transportgut 52 zwischen den Bewegungsvorrichtungen 48A und 48B einzuklemmen. Die Rollen der ersten Bewegungsvorrichtung 48A auch der zweiten Bewegungsvorrichtung 48B können auch vertauscht sein.

Steuerungstechnisch kann dies derart implementiert sein, dass der zweite Abstand d2 (oder der erste Abstand d1) auf einen konstanten Wert festgelegt wird. Der erste Abstand d1 (oder der zweite Abstand d2) kann hingegen temporär zum Realisieren einer kraftgeregelten Bewegung gegen das Transportgut 52 bzw. gegen die erste Bewegungsvorrichtung 48A (oder die zweite Bewegungsvorrichtung 48B) angesteuert werden, sodass vorzugsweise das Transportgut 52 zwischen den Bewegungsvorrichtungen 48A und 48B einklemmbar ist.

In Figur 10 ist rein exemplarisch dargestellt, dass das Steuerungskonzept der vorliegenden Offenbarung nicht nur für Gruppen aus je zwei Bewegungsvorrichtungen 48A, 48B anwendbar ist. Stattdessen kann das Steuerungskonzept auf Gruppen aus beliebig vielen Bewegungsvorrichtungen angewendet werden, zum Beispiel auf Gruppen aus je drei Bewegungsvorrichtungen 48A, 48B, 48C. Entsprechend kann die dritte Bewegungsvorrichtung 48C, wie schon die erste und zweite Bewegungsvorrichtung 48A, 48B, der Gruppe 48' zum Bewegen entlang des statischen Teils des Förderers 46 in Abhängigkeit von, vorzugsweise gekoppelt oder mitbewegend mit, dem ersten virtuellen Bewegungspfad 60 des ersten Modellobjekts 56 angesteuert werden, usw.

### Bezugszeichenliste

| | | | |
|---|---|---|---|
| 10 | Linearelektroantrieb-Förderer | 46 | Linearelektroantrieb-Förderer |
| 12 | Bewegungsvorrichtung | 48 | erste Gruppe |
| 14 | Bewegungsvorrichtung | 48A | erste Bewegungsvorrichtung |
| 16 | Bewegungsvorrichtung | 48B | zweite Bewegungsvorrichtung |
| 18 | Bewegungsvorrichtung | 48C | dritte Bewegungsvorrichtung |
| 20 | Transportgut | 50 | zweite Gruppe |
| 22 | Bewegungspfad | 50A | erste Bewegungsvorrichtung |
| 24 | Bewegungspfad | 50B | zweite Bewegungsvorrichtung |
| 26 | Bewegungspfad | 52 | Transportgut |
| 28 | Bewegungspfad | 54 | virtuelles Modell |
| 30 | Linearelektroantrieb-Förderer | 56 | erstes Modellobjekt |
| 32 | erste Gruppe | 58 | zweites Modellobjekt |
| 32A | erste Bewegungsvorrichtung | 60 | erster virtueller Bewegungspfad |
| 32B | zweite Bewegungsvorrichtung | 62 | zweiter virtueller Bewegungspfad |
| 34 | zweite Gruppe | 64 | relativer Bewegungspfad |
| 34A | erste Bewegungsvorrichtung | 66 | relativer Bewegungspfad |
| 34B | zweite Bewegungsvorrichtung | | |
| 36 | Transportgut | d1 | erster Abstand |
| 38 | Bewegungspfad | d2 | zweiter Abstand |
| 40 | Bewegungspfad | T1 | erster Zeitabschnitt |
| 42 | Bewegungspfad | T2 | zweiter Zeitabschnitt |
| 44 | Bewegungspfad | T3 | dritter Zeitabschnitt |

## Patentansprüche

1. Verfahren zum Betreiben eines Linearelektroantrieb-Förderers (46) aufweisend mehrere elektromagnetisch und unabhängig voneinander bewegbare Bewegungsvorrichtungen (48A, 48B, 50A, 50B), die in mehreren Gruppen (48, 50) zusammengefasst sind, wobei die mehreren Bewegungsvorrichtungen (48A, 48B, 50A, 50B) je Gruppe (48, 50) zum gemeinsamen Transportieren eines, vorzugsweise zwischen sich geklemmten oder gemeinsam gehaltenen, Transportguts (52) bewegbar sind,
**dadurch gekennzeichnet, dass** das Verfahren aufweist:
Erstellen jeweils eines virtuellen Bewegungspfads (60, 62) je Modellobjekt (56, 58) in einem virtuellen Modell (54), das den Linearelektroantrieb-Förderer (46) repräsentiert, wobei in dem virtuellen Modell (54) jede Gruppe (48, 50) durch jeweils ein Modellobjekt (56, 58) repräsentiert ist und die erstellten virtuellen Bewegungspfade (60, 62) jeweils einen zeitabhängigen Positionsverlauf des jeweiligen Modellobjekts (56, 58) entlang eines statischen Teils des virtuellen Modells (54) angeben; und
Steuern des Linearelektroantrieb-Förderers (46) zum Bewegen einer ersten Bewegungsvorrichtung (48A, 50A) und einer zweiten Bewegungsvorrichtung (48B, 50B) je Gruppe (48, 50) entlang eines statischen Teils des Linearelektroantrieb-Förderers (46) in Abhängigkeit von, vorzugsweise gekoppelt oder mitbewegend mit, dem virtuellen Bewegungspfad (60, 62) desjenigen Modellobjekts (56, 58), das die jeweilige Gruppe (48, 50) repräsentiert.

2. Verfahren nach Anspruch 1, wobei:
der Linearelektroantrieb-Förderer (46) derart gesteuert wird, dass sich die erste Bewegungsvorrichtung (48A, 50A) je Gruppe (48, 50) zumindest temporär in einem ersten Abstand (d1) zu dem virtuellen Bewegungspfad (60, 62) desjenigen Modellobjekts (56, 58), das die jeweilige Gruppe (48, 50) repräsentiert, synchron bewegt, vorzugsweise vorauseilt; und/oder
der Linearelektroantrieb-Förderer (46) derart gesteuert wird, dass sich die zweite Bewegungsvorrichtung (48B, 50B) je Gruppe (48, 50) zumindest temporär in einem zweiten Abstand (d2) zu dem virtuellen Bewegungspfad (60, 62) desjenigen Modellobjekts (56, 58), das die jeweilige Gruppe (48, 50) repräsentiert, synchron bewegt, vorzugsweise folgt.

3. Verfahren nach Anspruch 2, ferner aufweisend:
Vorgeben des ersten Abstands (d1) und/oder des zweiten Abstands (d2), vorzugsweise mittels einer Benutzerschnittstelle.

4. Verfahren nach Anspruch 3, wobei:
das Vorgeben des ersten Abstands (d1) und/oder des zweiten Abstands (d2) in Abhängigkeit von einer Größe des Transportguts (52) erfolgt,
wobei vorzugsweise:
je größer das Transportgut (52) ist, desto größer wird der erste Abstand (d1) und/oder der zweite Abstand (d2) vorgegeben; und/oder
eine Summe aus dem ersten Abstand (d1) und dem zweiten Abstand (d2) im Wesentlichen einer Breite des Transportguts (52) oder im Wesentlichen einem Durchmesser des Transportguts (52) entspricht.

5. Verfahren nach Anspruch 3 oder Anspruch 4, ferner aufweisend:
Auswählen des Transportguts (52) aus einer Auswahl von unterschiedlich großen Transportgütern,
wobei das Vorgeben des ersten Abstands (d1) und/oder des zweiten Abstands (d2) abhängig von einer Größe des ausgewählten Transportguts (52) erfolgt.

6. Verfahren nach einem der Ansprüche 2 bis 5, ferner aufweisend:
Verändern des ersten Abstands (d1) und/oder des zweiten Abstands (d2) bei einer Transportgutformatumstellung, vorzugsweise bei einer Behälterformatumstellung.

7. Verfahren nach einem der Ansprüche 2 bis 6, ferner aufweisend:
temporäres Übersteuern des ersten Abstands (d1) und/oder des zweiten Abstands (d2) zum Bewirken einer Relativbewegung zwischen der ersten Bewegungsvorrichtung (48A, 50A) und der zweiten Bewegungsvorrichtung (48B, 50B) je Gruppe (48, 50), vorzugsweise zum Übernehmen des Transportguts (52), Halten des Transportguts (52), Einklemmen des Transportguts (52), Übergeben des Transportguts (52) und/oder Freigeben des Transportguts (52).

8. Verfahren nach einem der Ansprüche 2 bis 7, wobei:
das temporäre Übersteuern des ersten Abstands (d1) und/oder des zweiten Abstands (d2) abhängig von einem veränderbaren Parameterwert, vorzugsweise Größenparameterwert, desjenigen Modellobjekts (56, 58), das die jeweilige Gruppe (48, 50) repräsentiert, erfolgt,
wobei vorzugsweise:
- der veränderbaren Parameterwert vor einem Einklemmen des Transportguts (52) größer ist als beim Einklemmen;
- der veränderbare Parameterwert sich zum Einklemmen des Transportguts (52) verringert;
- der veränderbare Parameterwert sich zum Freigeben des Transportguts (52) vergrößert; und/oder
- der veränderbare Parameterwert beim Freigeben des Transportguts (52) größer ist als beim Einklemmen.

9. Verfahren nach einem der Ansprüche 2 bis 8, ferner aufweisend:
Festlegen von einem von dem ersten Abstand (d1) und dem zweiten Abstand (d2) auf einen konstanten Wert; und
temporäres Übersteuern des anderen von dem ersten Abstand (d1) und dem zweiten Abstand (d2) mit einer kraftgeregelten Bewegung der jeweiligen Bewegungsvorrichtung (48A, 48B, 50A, 50B) zum Klemmen des Transportguts (52) zwischen der ersten Bewegungsvorrichtung (48A, 50A) und der zweiten Bewegungsvorrichtung (48B, 50B).

10. Verfahren nach einem der vorherigen Ansprüche, wobei:
der Linearelektroantrieb-Förderer (46) derart gesteuert wird, dass sich die erste Bewegungsvorrichtung (48A, 50A) und die zweite Bewegungsvorrichtung (48B, 50B) je Gruppe (48, 50) entlang des statischen Teils des Linearelektroantrieb-Förderers (46) zumindest temporär unter Vollführung einer Relativbewegung zueinander zum Einklemmen, Halten und/oder Freigeben des Transportguts (52) mit dem virtuellen Bewegungspfad (60, 62) desjenigen Modellobjekts (56, 58), das die jeweilige Gruppe (48, 50) repräsentiert, mitbewegen.

11. Verfahren nach einem der vorherigen Ansprüche, ferner aufweisend:
Steuern des Linearelektroantrieb-Förderers (46) zum Bewegen einer dritten Bewegungsvorrichtung (48C) je Gruppe (48, 50) entlang des statischen Teils des Linearelektroantrieb-Förderers (46) in Abhängigkeit von, vorzugsweise gekoppelt oder mitbewegend mit, dem virtuellen Bewegungspfad (60, 62) desjenigen Modellobjekts (56, 58), das die jeweilige Gruppe (48, 50) repräsentiert.

12. Verfahren nach einem der vorherigen Ansprüche, wobei:
der virtuelle Bewegungspfad (60, 62) je Modellobjekt (56, 58) einen Pfadabschnitt aufweist, der sich von einem Transportgutübernahmepunkt zum Übernehmen des Transportguts (52) zu einem Transportgutübergabepunkt zum Übergeben des Transportguts (52) erstreckt.

13. Verfahren nach einem der vorherigen Ansprüche, wobei:
der Linearelektroantrieb-Förderer (46) ein Langstator-Linearantrieb-Förderer, ein Kurzstator-Linearantrieb-Förderer oder ein Planar-Linearantrieb-Förderer ist.

14. Linearelektroantrieb-Förderer für eine Industrieanlage, vorzugsweise Behälterbehandlungsanlage, wobei der Linearelektroantrieb-Förderer (46) aufweist:
mehrere elektromagnetisch und unabhängig voneinander bewegbare Bewegungsvorrichtungen (48A, 48B, 50A, 50B), die in mehreren Gruppen (48, 50) zusammengefasst sind, wobei die mehreren Bewegungsvorrichtungen (48A, 48B, 50A, 50B) je Gruppe (48, 50) zum gemeinsamen Transportieren eines, vorzugsweise zwischen sich geklemmten oder gemeinsam gehaltenen, Transportguts (52) bewegbar sind; und
eine Steuereinheit, die dazu konfiguriert ist, ein Verfahren nach einem der vorherigen Ansprüche auszuführen.

15. Industrieanlage, vorzugsweise Behälterbehandlungsanlage, aufweisend:
einen Linearelektroantrieb-Förderer (46) nach Anspruch 14.

## Claims

1. A method for operating a linear electric drive conveyor (46) having multiple electromagnetically and independently movable moving devices (48A, 48B, 50A, 50B) which are combined into multiple groups (48, 50), wherein the multiple moving devices (48A, 48B, 50A, 50B) are movable in each group (48, 50) in order to jointly transport a transport item (52) which is preferably clamped between them or jointly held,
**characterized in that** the method comprises:
creating a virtual movement path (60, 62) for each model object (56, 58) in a virtual model (54) that represents the linear electric drive conveyor (46), wherein in the virtual model (54) each group (48, 50) is represented by a model object (56, 58) and the created virtual movement paths (60, 62) each indicate a time-dependent position progression of the respective model object (56, 58) along a static part of the virtual model (54); and
controlling the linear electric drive conveyor (46) in order to move a first moving device (48A, 50A) and a second moving device (48B, 50B), per group (48, 50), along a static part of the linear electric drive conveyor (46) according to, preferably coupled or co-moving with, the virtual movement path (60, 62) of the model object (56, 58) that represents the respective group (48, 50).

2. The method according to claim 1, wherein:
the linear electric drive conveyor (46) is controlled in such a way that the first moving device (48A, 50A) for each group (48, 50) moves synchronously, preferably in advance, at least temporarily at a first distance (d1) from the virtual movement path (60, 62) of the model object (56, 58) representing the respective group (48, 50); and/or
the linear electric drive conveyor (46) is controlled in such a way that the second moving device (48B, 50B) for each group (48, 50) moves synchronously, preferably follows, at least temporarily at a second distance (d2) from the virtual movement path (60, 62) of the model object (56, 58) representing the respective group (48, 50).

3. The method according to claim 2, further comprising:
specifying the first distance (d1) and/or the second distance (d2), preferably by means of a user interface.

4. The method according to claim 3, wherein:
the first distance (d1) and/or the second distance (d2) is specified depending on a size of the transport item (52),
wherein preferably:
the larger the transport item (52), the larger the specified first distance (d1) and/or the second distance (d2); and/or
a sum of the first distance (d1) and the second distance (d2) substantially corresponds to a width of the transport item (52) or substantially corresponds to a diameter of the transport item (52).

5. The method according to claim 3 or claim 4, further comprising:
selecting the transport item (52) from a selection of transport items of different sizes,
wherein the first distance (d1) and/or the second distance (d2) is specified depending on a size of the selected transport item (52).

6. The method according to any of claims 2 to 5, further comprising:
changing the first distance (d1) and/or the second distance (d2) when changing the transport item format, preferably when changing the container format.

7. The method according to any of claims 2 to 6, further comprising:
temporarily overriding the first distance (d1) and/or the second distance (d2) in order to effect a relative movement between the first moving device (48A, 50A) and the second moving device (48B, 50B) per group (48, 50), preferably in order to take over the transport item (52), hold the transport item (52), clamp the transport item (52), transfer the transport item (52) and/or release the transport item (52).

8. The method according to any of claims 2 to 7, wherein:
the temporary overriding of the first distance (d1) and/or of the second distance (d2) is dependent on a variable parameter value, preferably size parameter value, of the model object (56, 58) that represents the respective group (48, 50),
wherein preferably:
- the variable parameter value is greater before the transport item (52) is clamped than when it is clamped;
- the variable parameter value is reduced to clamp the transport item (52);
- the variable parameter value is increased to release the transport item (52); and/or
- the variable parameter value is greater when the transport item (52) is being released than when it is being clamped.

9. The method according to any of claims 2 to 8, further comprising:
setting one of the first distance (d1) and the second distance (d2) to a constant value; and
temporarily overriding the other of the first distance (d1) and the second distance (d2) with a force-controlled movement of the respective moving device (48A, 48B, 50A, 50B) in order to clamp the transport item (52) between the first moving device (48A, 50A) and the second moving device (48B, 50B).

10. The method according to any of the preceding claims, wherein:
the linear electric drive conveyor (46) is controlled in such a way that the first moving device (48A, 50A) and the second moving device (48B, 50B), per group (48, 50), move along the static part of the linear electric drive conveyor (46) at least temporarily while performing a relative movement to one another for clamping, holding and/or releasing the transport item (52) with the virtual movement path (60, 62) of the model object (56, 58) that represents the respective group (48, 50).

11. The method according to any of the preceding claims, further comprising:
controlling the linear electric drive conveyor (46) in order to move a third moving device (48C), per group (48, 50), along a static part of the linear electric drive conveyor (46) according to, preferably coupled or co-moving with, the virtual movement path (60, 62) of the model object (56, 58) that represents the respective group (48, 50).

12. The method according to any of the preceding claims, wherein:
the virtual movement path (60, 62) has, for each model object (56, 58), a path section which extends from a transport item takeover point for taking over the transport item (52) to a transport item transfer point for transferring the transport item (52).

13. The method according to any of the preceding claims, wherein:
the linear electric drive conveyor (46) is a long-stator linear drive conveyor, a short-stator linear drive conveyor or a planar linear drive conveyor.

14. A linear electric drive conveyor for an industrial system, preferably a container treatment system, wherein the linear electric drive conveyor (46) comprises:
multiple electromagnetically and independently movable moving devices (48A, 48B, 50A, 50B) which are combined into multiple groups (48, 50), wherein the multiple moving devices (48A, 48B, 50A, 50B) are movable in each group (48, 50) in order to jointly transport a transport item (52) which is preferably clamped between them or jointly held; and
a control unit configured to carry out a method according to any of the preceding claims.

15. An industrial system, preferably container treatment system, comprising:
a linear electric drive conveyor (46) according to claim 14.

## Revendications

1. Procédé permettant de faire fonctionner un convoyeur à entraînement électrique linéaire (46) présentant plusieurs dispositifs de déplacement (48A, 48B, 50A, 50B) pouvant être déplacés électromagnétiquement et indépendamment les uns des autres, lesquels sont réunis en plusieurs groupes (48, 50), dans lequel les dispositifs de déplacement (48A, 48B, 50A, 50B) de chaque groupe (48, 50) peuvent être déplacés pour le transport commun d'un produit à transporter (52), de préférence serré entre eux ou maintenu conjointement,
**caractérisé en ce que** le procédé présente :
la création de respectivement un chemin de déplacement virtuel (60, 62) par objet de modèle (56, 58) dans un modèle virtuel (54) qui représente le convoyeur à entraînement électrique linéaire (46), dans lequel chaque groupe (48, 50) est représenté dans le modèle virtuel (54) par respectivement un objet de modèle (56, 58) et les chemins de déplacement virtuels (60, 62) créés indiquent respectivement une évolution de position en fonction du temps de l'objet de modèle (56, 58) respectif le long d'une partie statique du modèle virtuel (54) ; et
la commande du convoyeur à entraînement électrique linéaire (46) pour le déplacement d'un premier dispositif de déplacement (48A, 50A) et d'un second dispositif de déplacement (48B, 50B) pour chaque groupe (48, 50) le long d'une partie statique du convoyeur à entraînement électrique linéaire (46) en fonction du, de préférence accouplé au, ou se déplaçant conjointement avec le chemin de déplacement virtuel (60, 62) de l'objet de modèle (56, 58) représentant le groupe (48, 50) respectif.

2. Procédé selon la revendication 1, dans lequel :
le convoyeur à entraînement électrique linéaire (46) est commandé de telle sorte que le premier dispositif de déplacement (48A, 50A) de chaque groupe (48, 50) se déplace, de préférence précède, de manière synchrone au moins temporairement à une première distance (d1), le chemin de déplacement virtuel (60, 62) de l'objet de modèle (56, 58) qui représente le groupe (48, 50) respectif ; et/ou
le convoyeur à entraînement électrique linéaire (46) est commandé de telle sorte que le deuxième dispositif de déplacement (48B, 50B) de chaque groupe (48, 50) se déplace, de préférence suit, de manière synchrone au moins temporairement à une seconde distance (d2), le chemin de déplacement virtuel (60, 62) de l'objet de modèle (56, 58) qui représente le groupe (48, 50) respectif.

3. Procédé selon la revendication 2, présentant en outre :
la spécification de la première distance (d1) et/ou de la seconde distance (d2), de préférence au moyen d'une interface utilisateur.

4. Procédé selon la revendication 3, dans lequel :
la spécification de la première distance (d1) et/ou de la seconde distance (d2) est effectuée en fonction d'une taille du produit à transporter (52), dans lequel de préférence :
plus le produit à transporter (52) est grand, plus la première distance (d1) et/ou la seconde distance (d2) sont spécifiées grandes ; et/ou
une somme de la première distance (d1) et de la seconde distance (d2) correspond sensiblement à une largeur du produit à transporter (52) ou sensiblement à un diamètre du produit à transporter (52).

5. Procédé selon la revendication 3 ou la revendication 4, présentant en outre :
la sélection du produit à transporter (52) parmi une sélection de produits à transporter de différentes tailles,
dans lequel la spécification de la première distance (d1) et/ou de la seconde distance (d2) est effectuée en fonction d'une taille du produit à transporter (52) sélectionné.

6. Procédé selon l'une des revendications 2 à 5, présentant en outre :
la modification de la première distance (d1) et/ou de la seconde distance (d2) lors d'un changement de format de produit à transporter, de préférence lors d'un changement de format de récipient.

7. Procédé selon l'une des revendications 2 à 6, présentant en outre :
la surmodulation temporaire de la première distance (d1) et/ou de la seconde distance (d2) pour provoquer un déplacement relatif entre le premier dispositif de déplacement (48A, 50A) et le deuxième dispositif de déplacement (48B, 50B) de chaque groupe (48, 50), de préférence pour prendre en charge le produit à transporter (52), maintenir le produit à transporter (52), serrer le produit à transporter (52), transférer le produit à transporter (52) et/ou libérer le produit à transporter (52).

8. Procédé selon l'une des revendications 2 à 7, dans lequel :
la surmodulation temporaire de la première distance (d1) et/ou de la seconde distance (d2) est effectuée en fonction d'une valeur de paramètre modifiable, de préférence une valeur de paramètre de taille, de l'objet de modèle (56, 58) qui représente le groupe (48, 50) respectif,
dans lequel de préférence :
- la valeur de paramètre modifiable avant un serrage du produit à transporter (52) est plus grande que lors du serrage ;
- la valeur de paramètre modifiable diminue pour le serrage du produit à transporter (52) ;
- la valeur de paramètre modifiable augmente pour la libération du produit à transporter (52) ; et/ou
- la valeur de paramètre modifiable est plus grande lors de la libération du produit à transporter (52) que lors du serrage.

9. Procédé selon l'une des revendications 2 à 8, présentant en outre :
la fixation d'une parmi la première distance (d1) et la seconde distance (d2) à une valeur constante ; et
la surmodulation temporaire de l'autre parmi la première distance (d1) et la seconde distance (d2) avec un déplacement à force régulée du dispositif de déplacement (48A, 48B, 50A, 50B) respectif pour le serrage du produit à transporter (52) entre le premier dispositif de déplacement (48A, 50A) et le deuxième dispositif de déplacement (48B, 50B).

10. Procédé selon l'une des revendications précédentes, dans lequel :
le convoyeur à entraînement électrique linéaire (46) est commandé de telle sorte que le premier dispositif de déplacement (48A, 50A) et le deuxième dispositif de déplacement (48B, 50B) de chaque groupe (48, 50) se déplacent le long de la partie statique du convoyeur à entraînement électrique linéaire (46) au moins temporairement en effectuant un déplacement relatif l'un par rapport à l'autre pour le serrage, le maintien et/ou la libération du produit à transporter (52) avec le chemin de déplacement virtuel (60, 62) de l'objet de modèle (56, 58) qui représente le groupe (48, 50) respectif.

11. Procédé selon l'une des revendications précédentes, présentant en outre :
la commande du convoyeur à entraînement électrique linéaire (46) pour le déplacement d'un troisième dispositif de déplacement (48C) pour chaque groupe (48, 50) le long de la partie statique du convoyeur à entraînement électrique linéaire (46) en fonction du, de préférence accouplé au, ou se déplaçant conjointement avec le chemin de déplacement virtuel (60, 62) de l'objet de modèle (56, 58) représentant le groupe (48, 50) respectif.

12. Procédé selon l'une des revendications précédentes, dans lequel :
le chemin de déplacement virtuel (60, 62) présente, pour chaque objet de modèle (56, 58), une section de chemin qui s'étend d'un point de prise en charge de produit à transporter pour la prise en charge du produit à transporter (52) à un point de transfert de produit à transporter pour le transfert du produit à transporter (52).

13. Procédé selon l'une des revendications précédentes, dans lequel :
le convoyeur à entraînement électrique linéaire (46) est un convoyeur à entraînement linéaire à stator long, un convoyeur à entraînement linéaire à stator court ou un convoyeur à entraînement linéaire plan.

14. Convoyeur à entraînement électrique linéaire pour une installation industrielle, de préférence une installation de traitement de récipients, dans lequel le convoyeur à entraînement électrique linéaire (46) présente :
plusieurs dispositifs de déplacement (48A, 48B, 50A, 50B) pouvant être déplacés électromagnétiquement et indépendamment les uns des autres, lesquels sont réunis en plusieurs groupes (48, 50), dans lequel les dispositifs de déplacement (48A, 48B, 50A, 50B) de chaque groupe (48, 50) peuvent être déplacés pour le transport commun d'un produit à transporter (52), de préférence serré entre eux ou maintenu conjointement ; et
une unité de commande configurée pour mettre en œuvre un procédé selon l'une des revendications précédentes.

15. Installation industrielle, de préférence installation de traitement de récipients, présentant :
un convoyeur à entraînement électrique linéaire (46) selon la revendication 14.
